Europäisches Patentamt

European Patent Office

Office européen des brevets

(11) Publication number: **0 055 231**
**B1**

(12) **EUROPEAN PATENT SPECIFICATION**

(45) Date of publication of patent specification: **10.09.86**

(51) Int. Cl.⁴: **G 02 B 6/44**

(21) Application number: **81850233.8**

(22) Date of filing: **08.12.81**

(54) **Arrangement in jointing boxes for optical cables.**

(30) Priority: **19.12.80 SE 8008989**

(43) Date of publication of application:
**30.06.82 Bulletin 82/26**

(45) Publication of the grant of the patent:
**10.09.86 Bulletin 86/37**

(84) Designated Contracting States:
**DE FR GB IT NL**

(56) References cited:
**DE-A-2 721 300**
**DE-A-2 735 106**
**DE-A-2 914 217**
**GB-A-2 040 494**

**Patent Abstracts of Japan, vol. 4, no. 103, 23 July 1980, page 113P20**

(73) Proprietor: **TELEFONAKTIEBOLAGET L M ERICSSON**
**S-126 25 Stockholm (SE)**

(72) Inventor: **Oscarsson, Jarl Allan Oscar**
**Lingvägen 179**
**S-123 59 Farsta (SE)**
Inventor: **Fridström, Börje Christer**
**Kräkbärsvägen 1**
**S-155 00 Nykvarn (SE)**

(74) Representative: **Johnsson, Helge et al**
**Telefonaktiebolaget L M Ericsson**
**S-126 25 Stockholm (SE)**

Courier Press, Leamington Spa, England.

## Description

### Technical Field

The invention relates to an arranging device for optical cables for picking up the surplus loop, obtained after joining the cables together.

### Background Art

Fibre optic conductors can be jointed in several different ways, e.g. by welding or gluing the ends together or by using some type of connector. The requirements for joining are that it must be as cheap as possible and cause a low attenuation. Moreover it has to be performed in the field when laying the cable. Consequently mostly welding and gluing is used and welding often is preferred due to the shorter jointing time. The common feature is that some kind of jointing apparatus is used which is located near the jointing place. This requires a certain amount of conductor surplus at the joint. As the fibre optic conductor is stiff and needs a minimum permissible radius of curvature to avoid straining the fibre to such an extent that cracks will arise, this surplus will be considerable, usually of the magnitude 0.5—1 m. The surplus conductor remaining after the joining has to be handled and stored in such a way in the joint box that it is kept in loops with a sufficient radius of curvature. In particular when the cables have a great number of separate fibre optic conductors, each conductor pair must be put in a separate loop.

GB—A—2040 494 describes such an arrangement for taking up excessive fibre lengths. It includes a number of flat stackable holders one for each pair of optical fibres, the ends of which are to be joined. Each holder is provided with one cylindrical storage space for each fibre end and a channel between these spaces into which the splice itself is positioned. The fibres on each side are wound in helical coils which are placed in the storage spaces. The internal stresses in the fibre tend to unwind these coils and stretch the splice.

### Disclosure of Invention

Although the cable joint device described in GB—A—2040 494 protects the fibre slices well the conductors are not easily available for inspection without the risk of damaging the conductors, through squeezing the loops in the storage areas too much when the fibre is drawn out. In addition, there is a risk that one turn squeezes another when the fibre is pulled out. In addition there always remains a considerable part of fibre in the storage areas which is not open to inspection without demounting the package of stackable holders. It is the object of the invention to provide an arranging device in which it is possible to fix each individual part of a fibre optic cable in loops with the required radius of curvature, the whole of the loops being available for inspection.

An arranging device according to the invention for optical cables for storage and maintaining surplus fibre lengths after jointing comprises a number of storage devices which are held one over the other by means of support devices in a rack, each of the storage devices having guiding means to guide at least one fibre length in loops, characterized in that the said support devices are two facing side walls of the rack and that each pick up device is pivoted individually in the side walls by means of a hole and a pin.

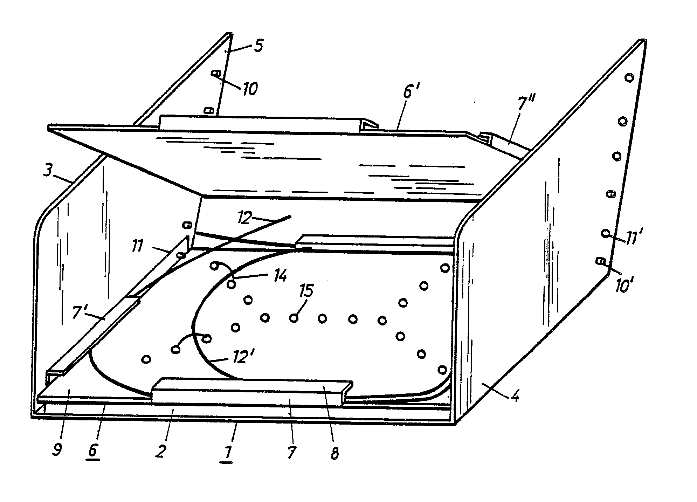

### Brief Description of the Drawing

The figure of the drawing shows a perspective sketch of an embodiment of an arranging device according to the invention.

### Mode for Carrying Out the Invention

The arranging device shown in the Figure is intended to be mounted in a joint box of a kind known per se, in which the cable ends to be joined are inserted through convenient sealings.

The arrangement includes a rack 1 consisting of a rectangular base plate 2 supplied with side walls 3 and 4. The rear edges 5 of the side walls 3, 4 incline backwards. The rack holds a number of storage plates 6, 6'. Each storage plate 6, 6' is supplied with borders 7 along all sides, which have a portion 8 that is inwardly bent to form channels that open inwardly. The corners of the pick up plate have no borders in order to enable the fibre optic conductor to be directed into and out of the storage plate 6 from an arbitrary corner.

The pick up plates 6 are pivoted in the side walls 3, 4 by means of holes and pins. Suitably one of the side walls 3 is provided with pins 10 and the corresponding border 7' on the plate 6 with holes while the other side wall 4 is provided with holes 22' and the corresponding border 7'' is provided with a pin 10'. As the back edges 5 of the side walls 3, 4 incline backwards and the pivot points of the pick up plates are mainly in parallel with the edges, it is possible to pivot a pick up plate, e.g. 6' as is shown in the Figure, suitably up to 90°, without being hindered by an underlying plate.

The arrangement functions in the following way. When a part 12 of the fibre optic cable is jointed, the surplus fibre is put into one or possibly several loops, which are pushed under the inwards bent borders 8 on a storage plate 6.

The resilience of the fibre 12 tries to expand the loop towards the edges so that the loop will be secured under the inwards bent borders 8. It is possible to fix the fiber further on the pick up plate 6 by means of pins or clips 14. This is particularly applicable when a loop 12' is so short that it cannot pass under any of the inwardly bent borders. These pins or clips are suitably adapted for mounting in a known way e.g. in holes 15 on the storage plate.

After the fibres have been arranged on the storage plates 6, all the plates are mounted in the side walls 3, 4. To facilitate the access it is also possible to mount the storage plates 6 as the fibres are put on the associated storage plate and fixed. This is possible as the side walls are resilient so that a storage plate can be easily inserted in the side walls. Naturally it is not necessary to mount more storage plates than needed for a certain jointing box. Should more cables be inserted in the jointing boxes, more storage plates could easily be inserted. The space between the storage plates is so chosen that they are closely packed when mounted. If it is required to inspect a joint or e.g. replace a damaged optical fibre the upper storage plates may be folded as the pages of a book and the required inspection or replacement can be effected without the risk of damaging the other optical fibres.

## Claims

1. An arranging device for optical cables for storing and maintaining surplus fibre lengths (12) after jointing comprising a number of storage devices (6) which are held one over the other by means of support devices (3, 4) in a rack (1), each of the storage devices (6) having guiding means (7, 8) to guide at least one fibre length (12) in loops, characterized in that the said support devices (3, 4) are two facing side walls (3, 4) of the rack (1) and that each pick up device (6) is pivoted individually in the side walls (3, 4) by means of a hole (10') and a pin (11).

2. An arranging device according to claim 1, characterized in that the storage devices (6) comprise planar plates, and that the guiding means include folded borders (7) of the upper part of the plate (8) the borders being bent towards the middle of the plate to form guide channels.

3. An arranging device according to claims 1 or 2, characterized in that the guiding means include pins or clips mounted on the pick up devices (6).

## Patentansprüche

1. Anordnungsvorrichtung für optische Kabel zum Speichern und Halten überzähliger Faserlängen (12) nach dem Zusammenfügen, enthaltend eine Anzahl von Speichervorrichtungen (6), welche mittels Stützvorrichtungen (3, 4) in einem Gestell (1) eine über der anderen gehalten sind, wobei jede der Speichervorrichtungen (6) Stützmittel (7, 8) zum Führen wenigstens einer Faserlänge (12) in Schleifen hat, dadurch gekennzeichnet, daß die Stützvorrichtungen (3, 4) zwei einander zugekehrte Seitenwände (3, 4) des Gestells (1) sind und daß jede Aufnahmevorrichtung (6) mittels eines Lochs (10') und eines Zapfens (11) individuell in den Seitenwänden (3, 4) schwenkbar angelenkt ist.

2. Anordnungsvorrichtung nach Anspruch 1, dadurch gekennzeichnet, daß die Speichervorrichtungen (6) ebene Platten umfassen, und daß die Führungsmittel gefaltete Umrandungen (7) der oberen Teils der Platte (8) einschließen, wobei die Umrandungen zur Mitte der Platte zum Bilden von Führungskanälen hingebogen sind.

3. Anordnungsvorrichtung nach Anspruch 1 oder 2, dadurch gekennzeichnet, daß die Führungsmittel auf der Aufnahmevorrichtung (16) angebrachte Zapfen oder Schellen einschließen.

## Revendications

1. Dispositif d'agencement pour câbles optiques, destiné à l'emmagasinage et au maintien de longueurs de fibres en surplus (12) après jonction, comprenant une certain nombre de dispositifs (6) d'emmagasinage qui sont maintenus les uns au-dessus des autres au moyen de dispositifs (3, 4) de support dans un râtelier (1), chacun des dispositifs (6) d'emmagasinage comportant des moyens (7, 8) de guidage destinés à former des boucles en guidant au moins une longueur de fibres (12), caractérisé en ce que lesdits dispositifs de support (3, 4) sont deux parois latérales (3, 4), face à face, du râtelier (1) et en ce que chaque dispositif (6) de reprise est articulé individuellement dans les parois latérales (3, 4) au moyen d'un trou (10') et d'un axe (11).

2. Dispositif d'agencement selon la revendication 1, caractérisé en ce que les dispositifs (6) d'emmagasinage comprennent des plaques planes et en ce que les moyens de guidage comprennent de rebords pliés (7) de la partie supérieure de la plaque (8), les rebords étant pliés vers le milieu de la plaque pour former des rainures de guidage.

3. Dispositif d'agencement selon les revendications 1 ou 2, caractérisé en ce que les moyens de guidage comprennent des épingles ou attaches montées sur les dispositifs (6) de reprise.